# EUROPÄISCHE PATENTSCHRIFT

(11) **EP 1 285 405 B1**
(45) Veröffentlichungstag und Bekanntmachung des Hinweises auf die Patenterteilung: **07.01.2009**
(21) Anmeldenummer: 01938219.1
(22) Anmeldetag: 14.05.2001
(51) Int. Cl.: G06K 19/077

(54) **VORRICHTUNG ZUM STANZEN VON KUNSTSTOFFEN**
DEVICE FOR PUNCHING PLASTIC MATERIALS
DISPOSITIF DE POINCONNAGE DE MATIERES PLASTIQUES

(30) Priorität: 15.05.2000 DE 10023801
(43) Veröffentlichungstag der Anmeldung: 26.02.2003
(73) Patentinhaber: Giesecke & Devrient GmbH, 81677 München (DE)
(72) Erfinder: DRESCHER, Georg, 83607 Holzkirchen (DE)
(74) Vertreter: Klunker . Schmitt-Nilson . Hirsch
(86) Internationale Anmeldenummer: PCT/EP2001/005467
(87) Internationale Veröffentlichungsnummer: WO 2001/088845

(56) Entgegenhaltungen:
- WO-A-85/01241
- WO-A-98/22265
- FR-A- 2 747 811

## Beschreibung

Die Erfindung betrifft eine Vorrichtung zum Erzeugen von Plug-in-Stanzungen in den Kunststoff von Chipkanten gemäß dem Oberbegriff des Anspruchs 1.

Stanzvorrichtungen zum Erzeugen von Plug-In-Stanzungen für Chipkarten sind seit längerer Zeit bekannt. Die bekannten Vorrichtungen weisen einen Stanzstempel auf, der mit einem Gegenlager bzw. einer Matrize zusammenwirkt, wobei der zu stanzende Kunststoff, d.h. die Chipkarte, zwischen dem Stanzstempel und der Matrize angeordnet ist. Der Stanzstempel ist bei diesen bekannten Vorrichtungen so geformt, daß er die Kontur der gewünschten Plug-In-Stanzung aufweist, wobei stets ein Stanzwinkel von 90° verwendet wird, um das Plug-In von der Chipkarte freizustanzen.

Die bekannten Plug-In-Ringstanzungen haben den Nachteil, daß insbesondere an der Oberseite der Stanzkante Farbrisse auftreten. Im übrigen ist an der Unterseite der Plug-In-Stanzkante eine Gratbildung zu beobachten und es verbleiben Stanzrückstände an der Unterseite. Hinsichtlich der Stanzvorrichtung sind Farbablagerungen durch den hohen Stanzdruck auf dem Gegenlager, d.h. der Matrize, erkennbar.

Aus der internationalen Anmeldung WO-A96/31427 ist eine Vorrichtung zum Schneiden von Kunststoffen bekannt, welche ein Gegenlager umfaßt, auf dem der zu schneidende Kunststoff angeordnet ist. Auf der dem Gegenlager abgewandten Seite des Kunststoffs wird ein keilförmiges Schneidmesser angeordnet, so daß der Kunststoff durchgeschnitten wird. Die Qualität der Schnittkanten wird erhöht, indem als Gegenlager ebenfalls ein keilförmiges Schneidmesser verwendet wird und die Schneidmesser so angeordnet sind, daß sie sich beim Schneidvorgang nicht berühren, d.h. es verbleibt eine schmale Seele, welche das Plug-In mit dem restlichen Kartenkörper noch verbindet, wobei die Verbindung dergestalt ist, daß ein leichtes Ausbrechen des Plug-Ins aus dem Kartenkörper möglich ist.

Mit dieser Vorrichtung können zwar die oben genannten Nachteile abgemildert werden, jedoch ist es in vielen Fällen notwendig oder gewünscht, das Plug-In über weite Bereiche vollständig vom restlichen Kartenkörper zu trennen, so daß lediglich eine geringere Anzahl von Stegen vorhanden ist, welche das Plug-In im Kartenkörper lösbar festhalten.

Es ist deshalb Aufgabe der Erfindung, eine Vorrichtung zum Stanzen von Plug-Ins anzugeben, bei der ein Freistanzen des Plug-Ins mit Ausnahme weniger Stege möglich ist, wobei die Nachteile der bekannten Stanzvorrichtungen vermieden werden.

Diese Aufgabe wird ausgehend von den Merkmalen des Oberbegriffs des Anspruchs 1 durch das kennzeichnende Merkmal gelöst.

Vorteilhafte Ausgestaltungen der Erfindung sind in den abhängigen Ansprüchen angegeben.

Gemäß der Erfindung ist es vorgesehen, für die Plug-In-Stanzungen, bei denen aus einer Chipkarte im ID-1-Format eine Minichipkarte im ID-000-Format erzeugt wird, einen Stanzstempel zu verwenden, der mit einem Gegenlager bzw. einer Matrize zusammenwirkt, d.h. bei dem die zu stanzende Chipkarte auf einer Matrize aufgelegt ist und mit dem Stanzstempel eine Freistanzung im Plug-In-Format erzeugt. Die Schnittfläche des Stanzstempels weist dabei gemäß der Erfindung einen Stanzwinkel auf, der kleiner als 90° ist.

Die erfindungsgemäße Vorrichtung hat den Vorteil, daß durch die Form des Stanzstempels, der nunmehr an den Rändern quasi eine Schneide aufweist, eine präzise Trennung möglich ist. Es wird dadurch vermieden, daß an der Stanzkante Farbrisse auftreten oder es zu einer Gratbildung an der Unterseite der Plug-In-Stanzkante kommt.

Gemäß einer vorteilhaften Ausgestaltung der Erfindung beträgt der Stanzwinkel 45°. Über diesen Winkel wird bereits eine ausreichend steile Schneide erzeugt, und das ausgestanzte Material wird durchgedrückt und kann leicht vom Stempel entfernt werden.

Gemäß weiteren vorteilhaften Ausgestaltungen der Erfindung ist vorgesehen, anstelle eines festen Schneidwinkels von weniger als 90° bzw. gemäß der vorangehenden vorteilhaften Ausgestaltung von 45°, d.h. eines insgesamt V-förmigen Querschnitts des Stanzstempels den Querschnitt kreisförmig oder in Form einer halben Ellipse auszuführen. Bei diesen Ausführungsformen wird durch den steileren Winkel die Schnittkante noch präziser und das ausgestanzte Material ist trotzdem leicht entfernbar.

Gemäß einer weiteren vorteilhaften Ausgestaltung der Erfindung ist vorgesehen, die Schneidkanten wellenförmig auszubilden. Auf diese Weise wird beim Eindrücken des Stanzstempels in das Material der Chipkarte der Druck nicht gleichzeitig über den ganzen Bereich aufgebaut, sondern er beginnt an dem Punkt zu wirken, an dem die Wellenform ihr Maximum hat und baut sich langsam auf, bis der gesamte Schneideteil des Stanzstempels in das Material eingedrungen ist.

Im folgenden wird die Erfindung anhand der Fig. 1 bis 6 näher erläutert.

Es zeigen:
- Fig. 1: eine Chipkarte mit Plug-In,
- Fig. 2: die vergrößerte Ansicht eines Stanzstempels im Querschnitt,
- Fig. 3: eine Ansicht von unten auf die Ringstanze,
- Fig. 4 und 5: weitere Ausführungsformen für den Querschnitt des Stanzstempels und
- Fig. 6: eine Seitenansicht des Stanzstempels.

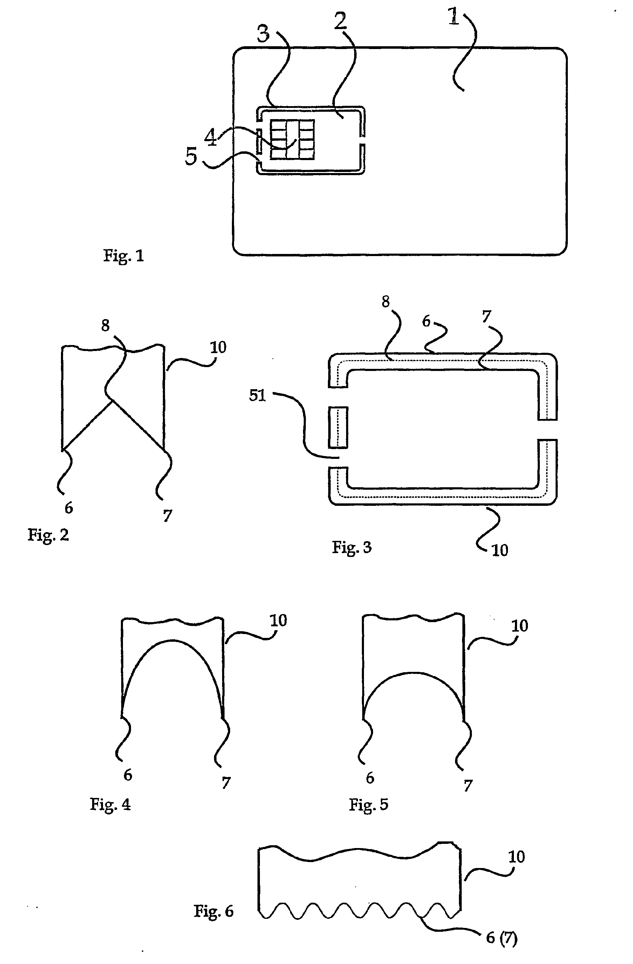

Die Fig. 1 zeigt eine Chipkarte 1, welche vorzugweise die Abmessungen gemäß ID-1-Format aufweist. Darin eingelagert ist eine Minichipkarte 2, d.h. ein Plug-In im ID-000-Format. Das Plug-In ist durch Ausstanzungen 3 von dem restlichen Kartenkörper der Chipkarte 1 weitgehend getrennt. Eine Verbindung zum Kartenkörper besteht lediglich über die Stege 5. Das Plug-In 2 selbst enthält einen integrierten Schaltkreis 4 mit Kontaktflächen. Selbstverständlich kann zusätzlich oder anstelle zu den Kontaktflächen auch eine Spule bzw. sonstige Antenne für die kontaktlose Datenübertragung im Plug-In 2 angeordnet sein.

Die Fig. 2 zeigt einen Querschnitt eines Stanzstempels zum Erzeugen des Freischnitts 3 der Fig. 1. Im Gegensatz zum Stand der Technik weist der Stanzstempel gemäß der Erfindung einen Stanzwinkel auf, der kleiner als 90°, vorzugsweise 45° ist. Es entstehen dadurch die Schneidspitzen 6 und 7, welche es zulassen, daß die Ränder der Stanzung frei von Farbrissen oder Gratbildungen sind. Der Querschnitt ist V-förmig ausgebildet mit einem Eckpunkt 8. Bei der vorzugsweisen Ausgestaltung eines Winkels von 45° wird erreicht, daß neben der guten Qualität der Stanzränder das ausgestanzte Material auch leicht ausgeworfen werden kann.

Die Fig. 3 zeigt eine Ansicht von unten auf die Ringstanze. Die Stanzspitzen 6 und 7 sind mit durchgezogener Linie abgebildet, während die innere Spitze 8 des Stanzstempels strichliert dargestellt ist. Die Ringstanze enthält Unterbrechungen 51, um die in der Fig. 1 gezeigten Stege, mit welchen das Plug-In 2 mit dem Kartenkörper 1 verbunden ist, zu erhalten.

In Fig. 4 sind alternative Ausführungsformen für den Querschnitt des Stanzstempels 10 angegeben. Die Fig. 4 zeigt einen halbkreisförmigen Querschnitt im Bereich der Schnittfläche. Durch diesen Querschnitt kann der Stanzwinkel an den Punkten 6 und 7 steiler gemacht werden, wobei dennoch kein allzu eng zulaufender Querschnitt der Ausnehmung in Kauf genommen werden muß, so daß das ausgestanzte Material dennoch leicht ausgeworfen werden kann. Einen steileren Winkel kann man gemäß Fig. 5 erhalten, wenn anstelle des halbkreisförmigen Querschnitts die Form einer halben Ellipse als Querschnittsfläche gewählt wird.

Die Fig. 6 zeigt schließlich eine Seitenansicht des Stanzwerkzeugs, bei dem die Schneidspitze 7 (6) wellenförmig ausgebildet ist. Auf diese Weise wird in vorteilhafter Weise erreicht, daß bei Verwendung einer Ringstanze, wie in Fig. 3 angegeben, das Stanzwerkzeug nach und nach in das zu schneidende Material eindringt. Auf diese Weise wird sowohl die Kraftverteilung gleichmäßiger und die Schnittwirkung bzw. die Qualität der Freistanzung wird verbessert.

## Patentansprüche

1. Vorrichtung zum Erzeugen von Plug-In-Stanzungen in der Kunstaststoff von Chipkarten (1), wobei der Stanzstempel (10) mit einer Matrize oder einem Gegenlager zusammenwirkt und der zu stanzende Kunststoff (1) zwischen dem Stanzstempel (10) und dem Gegenlager bzw. der Matrize angeordnet ist, wobei die Schnittfläche des Stanzstempels (10) einen Stanzwinkel aufweist, der kleiner als 90° ist, **dadurch gekennzeichnet, daß** der Querschnitt des Stanzstempels (10) V-förmig, halbkreisförmig oder in Form einer halben Ellipse ausgebildet ist und die Ränder der Schnittfläche somit die Form einer Schneide aufweisen.

2. Vorrichtung nach Anspruch 1, **dadurch gekennzeichnet, daß** die Schneidspitzen (6, 7) des Stanzstempels (10) wellenförmig ausgebildet ist.

## Claims

1. An apparatus for producing plug-in punchings in the plastic of chip cards (1), the stamping punch (10) cooperating with a die-plate or support, and the plastic (1) to be punched being disposed between the stamping punch (10) and the support or die-plate, the cutting surface of the stamping punch (10) having a punching angle smaller than 90°, **characterized in that** the cross section of the stamping punch (10) is of V-shaped, semicircular or hemiellipsoidal form, and the edges of the cutting surface thus have the form of a blade.

2. The apparatus according to claim 1, **characterized in that** the cutting bits (6, 7) of the stamping punch (10) are of wavy form.

## Revendications

1. Dispositif destiné à la production de découpages de plugins dans la matière plastique de cartes à puce (1), le poinçon de découpage (10) agissant en concomitance avec une matrice ou un contre-palier, et la matière plastique (1) devant être découpée étant disposée entre le poinçon de découpage (10) et le contre-palier ou la matrice, la surface coupante du poinçon de découpage (10) présentant un angle de découpage inférieur à 90°, **caractérisé en ce que** la section du poinçon de découpage (10) est réalisée en forme de V, d'un demi-cercle ou d'une demie-ellipse, les bords de la surface coupante présentant donc la forme d'une lame.

2. Dispositif selon la revendication 1, **caractérisé en ce que** les arêtes de lame (6, 7) du poinçon de découpage (10) sont réalisées en forme ondulée.
